# EUROPEAN PATENT APPLICATION

(11) **EP 2 849 382 A1**
(43) Date of publication of application: **18.03.2015**
(21) Application number: 13184391.4
(22) Date of filing: 13.09.2013
(51) Int. Cl.: H04L 12/12, H04L 12/28

(54) **Wireless control in building automation systems**

(71) Applicant: ASSA ABLOY IP AB, 107 23 Stockholm (SE)
(72) Inventor: Jonsson, Tomas, 144 62 Rönninge (SE)
(74) Representative: Wihlsson, Joakim Per Magnus

(57) **Abstract**

A building automation component (110) is presumed to be integrated into a building for controlling at least one unit (120) and/ or function therein. The building automation component (110) includes a wireless interface (115), and a data processing unit configured to control the wireless interface (115) to operate in a first mode. The first mode of operation involves listening on a first link (WL1) for a wake-up message (WM) designating the building automation component (110). In response to a received wake-up message (WM) designating the building automation component (110), the data processing unit controls the wireless interface (115) to operate in a second mode for receiving at least one control command (CD). Thereafter the data processing unit causes the wireless interface (115) to re-enter the first mode of operation.

## Description

### THE BACKGROUND OF THE INVENTION AND PRIOR ART

The present invention relates generally to solutions for remote control of various units and functions in a building. More particularly the invention relates to a building automation component according to the preamble of claim 1 and a corresponding method according to the preamble of claim 8. The invention also relates to a computer program product according to claim 15 and a computer readable medium according to claim 16.

In modern buildings, especially business premises and public edifices, so-called building automation systems have become increasingly important, i.e. solutions for automatic and/or remote control of different units and functions in a building, such as locks, opening mechanisms, lights, heating and cooling. The building automation systems, in turn, often operate according to a synchronous communication scheme.

US 2005/0237161 discloses a remote keyless entry (RKE) transponder, which (to reduce the risk of false/unnecessary wakeups) has a programmable selective wake-up filter for determining whether the RKE transponder should wake-up to process a received signal. The wake-up filter correlates the timing of an input signal's carrier amplitude on and off time periods to a predefined programmable time period profile for a desired signal which has a certain carrier on time (time period on) and a certain carrier off time (time period off) arranged into a coded "header." When a received signal matches the predefined time period profile, then the RKE transponder will wake-up to process the incoming signal data. The predefined time period profile may be programmable and may be stored in a header configuration register. Each RKE transponder has unique predefined time period on and time period off profiles.

### PROBLEMS ASSOCIATED WITH THE PRIOR ART

Consequently, an asynchronous solution is known for an RKE transponder. Although this solution may be advantageous for a transponder in terms of energy consumption, the approach is problematic for other access-related components, e.g. automatic locks and door opening mechanisms, which must also be able to exchange data with other nodes in a communication network, typically in connection with entries to and exits from an area being access controlled by the building automation component.

### SUMMARY OF THE INVENTION

The object of the present invention is therefore to solve the above problem, and thus offer a solution that is both energy efficient and has relatively fast response time.

According to one aspect of the invention, the object is achieved by the initially described system, wherein the first mode of operation involves listening on a first link for a wake-up message designating the building automation component. The data processing unit associated with the building automation component is further configured to, in response to a received wake-up message, control the wireless interface to operate in a second mode. In this mode, the wireless interface is configured to receive at least one control command. Thereafter, the data processing unit causes the wireless interface to re-enter the first mode of operation, and thus continue to listen for messages from a central node in the system.

This building automation component is advantageous because its default mode of operation, i.e. the first mode, provides an overall low energy consumption, while offering relatively short response times. The second mode of operation also presents an opportunity for efficient direct communication whenever this is needed. Further, this operation scheme is compatible with communication standards such as 802.15.4 (the MAC layer of Zig Bee). Additionally, a conventional Wi-Fi receiver, which is designed for a synchronous communication protocol, can be controlled to operate according to the proposed first and second modes of operation. Here, the receiver is controlled to a "stand-by mode" whenever there are no incoming commands (i.e. the receiver is not associated to the coordinator). Thus, a very low overall power consumption can be attained. Naturally, the same is true also for many other kinds of synchronous receivers, for instance of Classic-Bluetooth type.

According to one preferred embodiment of this aspect of the invention, the wireless interface is associated with a radio receiver. It is further presumed that the first mode of operation involves activating the radio receiver exclusively at predefined time instances. For example, the first mode of operation may involve receiving a predefined number of beacon messages on the first link at well-defined time instances in a repeating message pattern. Thus, given that the amount of energy resources available to the building automation component is known, a particular minimal uptime for the component can be guaranteed.

Preferably, the radio receiver is configured to operate at frequencies on or above 300 MHz, and on or below 5 GHz.

According to another preferred embodiment of this aspect of the invention, the repeating message pattern further involves receiving at least one synchronization message via the wireless interface at at least one well-defined time instance. Preferably, the repeating message pattern has a frequency of repetition between 0,05 Hz and 10 Hz. It is further advantageous if, in response to a received synchronization message, the building automation component is configured to send an acknowledgement message indicating an operating state of the building automation component, e.g. informing that this component is active via a communication-layer-stack message. Thereby, a central node may conveniently keep an updated record of a large group of building automation components. More important, receiving repeatedly the synchronization messages in each of the building automation components renders it possible to maintain the clocks in the building automation components synchronized.

According to yet another preferred embodiment of this aspect of the invention, the building automation component further includes a radio transmitter, which is configured to send an acknowledgement message in response to the at least one synchronization message on the first link. Thus, two-way communication can be established in a straightforward manner between the building automation component and another node, such as a control node.

According to another aspect of the invention, the object is achieved by the method described initially, wherein the first mode of operation involves listening on a first link for a wake-up message designating the building automation component. In response to a received wake-up message designating the building automation component, the method further includes the steps of: operating the wireless interface in a second mode; receiving at least one control command in said second mode of operation, and thereafter re-entering the first mode of operation. The advantages of this method, as well as the preferred embodiments thereof, are apparent from the discussion above with reference to the proposed system.

According to a further aspect of the invention the object is achieved by a computer program product, which is loadable into the memory of a computer, and includes software for performing the steps of the above proposed method when executed on a computer.

According to another aspect of the invention the object is achieved by a computer readable medium, having a program recorded thereon, where the program is make a computer perform the method proposed above when the program is loaded into the computer.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows an overview of a system according to one embodiment of the invention;
- Figure 2: shows a block diagram over a building automation component according to one embodiment of the invention;
- Figure 3: contains a diagram illustrating one example of a repeating message pattern in accordance with which the proposed building automation component may operate according to the invention; and
- Figure 4: illustrates, by means of a flow diagram, the general method according to the invention.

### DESCRIPTION OF PREFERRED EMBODIMENTS OF THE INVENTION

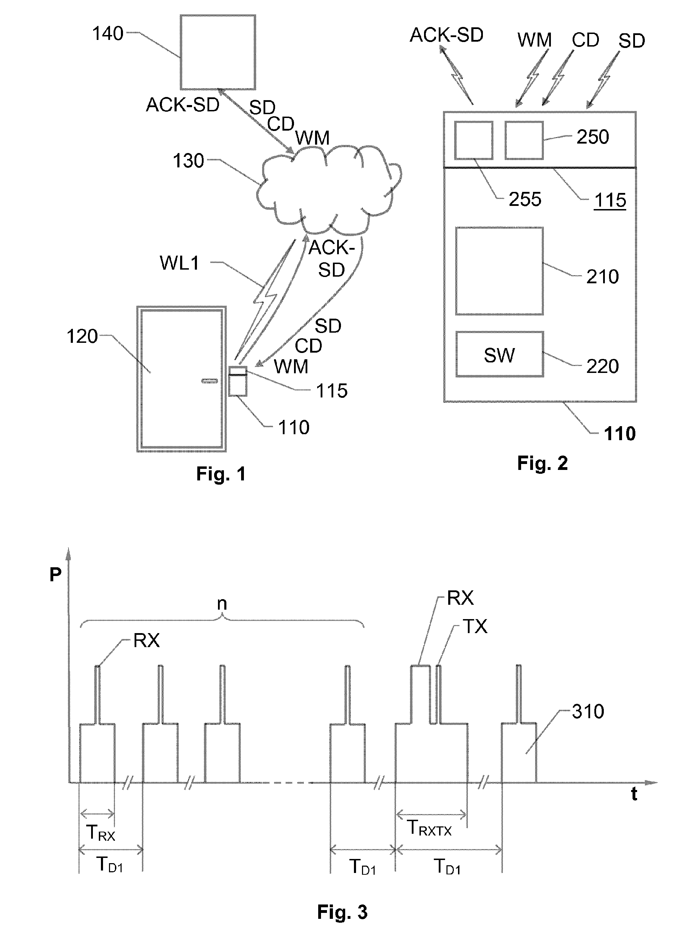

Initially, we refer to Figures 1 and 2, which show an overview of a system and a block diagram respectively over a building automation component 110 according to one embodiment of the invention.

A central node 140 generates and transmits various messages SD, CD and WM to the building automation component 110 via at least one communication network 130 and, preferably, a first link WL1 that is wireless.

The building automation component 110 is configured to be integrated into a building for controlling at least one unit 120 and/or function in the building, e.g. an electronic lock, an automatic door, lights, ventilation, cooling or heating. The building automation component 110, in turn, contains a wireless interface 115 and a data processing unit 210 configured to control the wireless interface 115. Specifically, the data processing unit 210 is configured to control the wireless interface 115 to either operate in a first mode or a second mode.

The first mode of operation involves listening on the first link WL1 for a wake-up message WM designating the building automation component 110. In response to a received wake-up message WM designating the building automation component 110, the data processing unit 210 is configured to control the wireless interface 115 to operate in the second mode in order to receive at least one control command CD. Thereafter, i.e. after having received the at least one control command CD, the data processing unit 210 is configured to cause the wireless interface 115 to re-enter the first mode of operation. Of course, if the building automation component 110 does not receive a wake-up message WM on the first link WL1, the building automation component 110 does not enter the second mode of operation.

To execute wireless communication, the wireless interface 115 is preferably associated with a radio receiver 250 and a radio transmitter 255. However, according to the invention, the wireless interface 115 may equally well include a receiver and a transmitter configured to receive other types of wireless signals, such as optical, acoustic or inductive signals.

Further, the first mode of operation involves activating the radio receiver 250 exclusively at predefined time instances, namely according to a well-defined scheme. Figure 3 contains a diagram that illustrates one example of a repeating message pattern in accordance with which the proposed building automation component 110 may operate according to the invention. In the diagram of Figure 3, the horizontal axis represents time t and the vertical axis shows a signal power P.

Preferably, the first mode of operation involves receiving a predefined number n, say 9, of beacon messages on the first link WL1 at well-defined time instances in a repeating message pattern, for example as illustrated by the diagram in Figure 3. The repeating message pattern may have a frequency of repetition on or above 0,05 Hz and on or below 10 Hz.

More precisely, the repeating message pattern may involve receiving a sequence of signal pulses, where each signal pulse has a duration T_{RX}, say 0,2 to 5,0 ms (provided operation on the 2,5 GHz band at 250 kb/s), and a temporal interspacing between subsequent signal pulses is T_{D1}. Moreover, each signal pulse may have a varying signal power P over the duration T_{RX}, for example including a central spike RX as shown in Figure 3.

After said predefined number n of beacon messages, the repeating message pattern preferably contains at least one synchronization message SD, which is received by the building automation component 110 for synchronizing a clock in the building automation component 110 and in response to which the building automation component 110 may indicate an operating state, e.g. reflecting that it is active. Hence, an n+1:th beacon message may further include a transmitting spike TX in addition to the receiving spike RX. Thus, the repeating message pattern further involves receiving at least one synchronization message SD via the wireless interface 115 at at least one well-defined time instance.

To this aim, according to one preferred embodiment of the invention, the building automation component 110 includes a radio receiver 250 which is configured to receive the least one synchronization message SD on the first link WL1 and a radio transmitter 255, which is configured to send an acknowledgement message ACK-SD in response to the least one synchronization message SD on the first link WL1. However, as mentioned above, the wireless interface 115 may equally well include a receiver and a transmitter configured to transmit other types of wireless signals, such as optical, acoustic or inductive signals.

Moreover, the receiving spike RX of the synchronization message SD may be somewhat longer than the corresponding spike in each of the predefined number n of beacon messages, and a total duration T_{RXTX} of the one synchronization message SD preferably exceeds T_{RX}. For example T_{RXTX} may have a duration of 1,0 to 4,0 ms. Nevertheless, the temporal interspacing to a signal pulse 310 in a subsequent sequence of n beacon messages is preferably also T_{D1}.

According to one preferred embodiment of the invention, the receiver 250 and the transmitter 255 of the wireless interface 115 are configured to operate at frequencies on or above 300 MHz and on or below 5 GHz, i.e. on the UHF band (UHF = Ultra High Frequency).

Preferably, the data processing unit 210 contains, or is in communicative connection with a memory unit 220 storing a computer program product SW, which contains software for making the data processing unit 210 execute the above-described actions when the computer program product SW is run on the data processing unit 210.

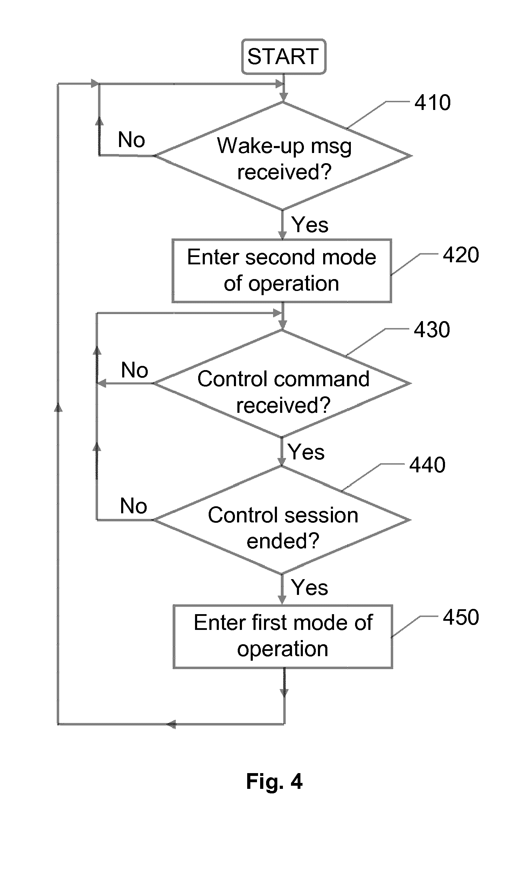

In order to sum up, and with reference to the flow diagram in Figure 4, we will now describe the general method of communicating over a wireless interface in a building automation component 110 according to the invention.

Initially, it is presumed that the building automation component 110 operates its wireless interface 115 in a first mode.

In a first step 410, it is investigated if a wake-up message WM designating the building automation component 110 has been received over the wireless interface 115. If so, the procedure continues to step 420, and otherwise the procedure loops back and stays in step 410. In step 420 the wireless interface 115 is controlled to operate in a second mode. In this mode, a step 430 investigates if a control command CD is received, and if so a step 440 follows. Otherwise, the procedure loops back and stays in step 430.

Step 440 checks if the control session is ended, i.e. if a last control command CD has been received. If so, a step 450 follows, and otherwise the procedure loops back to step 430 for continued reception of control commands CD.

Step 450 involves controlling the wireless interface 115 to re-enter the first mode of operation. Thereafter, the procedure loops back to step 410.

All of the process steps, as well as any sub-sequence of steps, described with reference to Figure 2 above may be controlled by means of a programmed computer apparatus. Moreover, although the embodiments of the invention described above with reference to the drawings comprise a computer apparatus and processes performed in a computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/ Versatile Disk), a CD (Compact Disc) or a semiconductor ROM, an EP-ROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The term "comprises/comprising" when used in this specification is taken to specify the presence of stated features, integers, steps or components. However, the term does not preclude the presence or addition of one or more additional features, integers, steps or components or groups thereof.

The invention is not restricted to the described embodiments in the figures, but may be varied freely within the scope of the claims.

## Claims

1. A building automation component (110) configured to be integrated into a building for controlling at least one unit (120) and/or function therein, the building automation component (110) comprising:
a wireless interface (115), and
a data processing unit (210) configured to control the wireless interface (115) to operate in a first mode,
**characterized in that**
the first mode of operation involves listening on a first link (WL1) for a wake-up message (WM) designating the building automation component (110), and
the data processing unit (210) is configured to, in response to a received wake-up message (WM) designating the building automation component (110), control the wireless interface (115) to operate in a second mode for receiving at least one control command (CD), and thereafter cause the wireless interface (115) to re-enter the first mode of operation.

2. The building automation component (110) according to claim 1, wherein the wireless interface (115) is associated with a radio receiver (250), and the first mode of operation involves activating the radio receiver (250) exclusively at predefined time instances.

3. The building automation component (110) according to claim 2, wherein the radio receiver (250) is configured to operate at frequencies on or above 300 MHz and on or below 5 GHz.

4. The building automation component (110) according to any one of the preceding claims, wherein the first mode of operation involves receiving a predefined number (n) of beacon messages on the first link (WL1) at well-defined time instances in a repeating message pattern.

5. The building automation component (110) according to claim 4, wherein the repeating message pattern further comprises receiving at least one synchronization message (SD) via the wireless interface (115) at at least one well-defined time instance.

6. The building automation component (110) according to claim 5, further comprising a radio transmitter (255) configured to transmit an acknowledgement message (ACK-SD) on the first link (WL1) in response to a received synchronization message (SD), the acknowledgement message (ACK-SD) indicating an operating state of the building automation component (110).

7. The building automation component according to any one of claims 4 to 6, wherein the repeating message pattern has a frequency of repetition on or above 0,05 Hz and on or below 10 Hz.

8. A method of communicating over a wireless interface (115) in a building automation component (110) integrated into a building for controlling at least one unit (120) and/or function therein, the method comprising:
[a] operating the wireless interface (115) in a first mode, **characterized by** the first mode of operation involving listening on a first link (WL1) for a wake-up message (WM) designating the building automation component (110), and in response to a received wake-up message (WM) designating the building automation component (110), the method further comprising:
[b] operating the wireless interface (115) in a second mode,
[c] receiving at least one control command (CD) in said second mode of operation, and thereafter
[d] re-entering the first mode of operation [a].

9. The method according to claim 8, wherein the first mode of operation [a] involves activating a radio receiver (250) exclusively at predefined time instances.

10. The method according to claim 9, wherein the radio receiver (250) is configured to operate at frequencies on or above 300 MHz and on or below 5 GHz.

11. The method according to any one of claims 8 to 10, wherein the first mode of operation [a] involves receiving a predefined number (n) of beacon messages on the first link (WL1) at well-defined time instances in a repeating message pattern.

12. The method according to claim 11, wherein the repeating message pattern further comprises receiving at least one synchronization message (SD) in the building automation component (110) at at least one well-defined time instance,

13. The method according to claim 12, comprising transmitting an acknowledgment message (ACK-SD) on the first link (WL1) in response to a received synchronization message (SD), the acknowledgment message (ACK-SD) indicating an operating state of the building automation component (110).

14. The method according to any one of claims 11 to 13, wherein the repeating message pattern has a frequency of repetition on or above 0,05 Hz and on or below 10 Hz.

15. A computer program product loadable into the memory (220) of a computer, comprising software (SW) for performing the steps of the method according to any of the claims 8 to 14 when executed on a computer.

16. A computer readable medium (210), having a program recorded thereon, where the program is to make a computer perform the steps of any of the claims 8 to 14.
